# FASCICULE DE BREVET EUROPEEN

(11) **EP 0 894 998 B1**
(45) Date de publication et mention de la délivrance du brevet: **14.05.2003**
(21) Numéro de dépôt: 98401897.8
(22) Date de dépôt: 24.07.1998
(51) Int. Cl.: F16F 13/14

(54) **Support antivibratoire hydraulique**
Schwingungsdämpfendes Lager
Hydraulic damping support

(30) Priorité: 01.08.1997 FR 9709880
(43) Date de publication de la demande: 03.02.1999
(73) Titulaire: HUTCHINSON, 75008 Paris (FR)
(72) Inventeur: Bellamy, Alain, 41100 Naveil (FR); Reh, Denis, 28200 Thiville (FR)
(74) Mandataire: Burbaud, Eric

(56) Documents cités:
- EP-A- 0 577 916
- EP-A- 0 646 735
- EP-A- 0 709 594
- EP-A- 0 721 071
- FR-A- 2 593 255
- PATENT ABSTRACTS OF JAPAN vol. 012, no. 437 (M-765), 17 novembre 1988 & JP 63 172036 A (NISSAN MOTOR CO LTD), 15 juillet 1988
- PATENT ABSTRACTS OF JAPAN vol. 096, no. 009, 30 septembre 1996 & JP 08 135720 A (BRIDGESTONE CORP), 31 mai 1996

## Description

La présente invention est relative aux supports antivibratoires hydrauliques.

Plus particulièrement, l'invention concerne un support antivibratoire hydraulique, destiné à être interposé entre deux éléments rigides pour amortir des vibrations entre ces deux éléments essentiellement selon un premier axe, ce support comportant :
- des première et deuxième armatures rigides, solidarisables respectivement avec les deux éléments rigides à réunir, la deuxième armature étant constituée par une platine qui s'étend perpendiculairement au premier axe et qui présente une face dite de support, orientée vers la première armature,
- un corps en élastomère qui relie la première armature à la platine et qui présente une base appliquée en contact étanche contre la face de support de la platine par simple serrage parallèlement au premier axe, ce serrage axial étant obtenu au moyen d'une plaque ajourée rigide qui est noyée dans la base du corps en élastomère et qui est solidarisée avec la platine par sertissage de pattes sur des bords de réception, ces pattes et ces bords de réception appartenant respectivement les uns à la plaque ajourée et les autres à la platine, la base du corps en élastomère présentant à sa périphérie, d'une part, au moins deux bords opposés, dits bords de fixation, le long desquels est réalisé ledit sertissage et, d'autre part, au moins deux bords libres qui séparent les bords de fixation, la plaque ajourée présentant elle-même des bords libres qui sont noyés dans les bords libres de la base du corps en élastomère et qui sont simplement en appui axial contre la face de support de la platine, le corps en élastomère comportant en outre une paroi épaisse en forme de cloche qui s'étend selon le premier axe en s'évasant depuis un sommet solidaire de la première armature jusqu'à la base dudit corps en élastomère et qui délimite avec la face de support de la platine au moins une première chambre hydraulique remplie de liquide,
- une deuxième chambre hydraulique déformable qui est également remplie de liquide,
- et un canal étranglé rempli de liquide, quirelie entre elles les première et deuxième chambres hydrauliques.

Le document EP-A-0 646 735 décrit un exemple de support antivibratoire hydraulique du type visé ci-dessus, dans lequel les bords de réception, sur lesquels sont serties les pattes permettant l'assemblage du support, sont de simples bordures planes s'étendant perpendiculairement au premier axe.

L'expérience a montré qu'au fur et à mesure de l'utilisation de ces supports antivibratoires, les pattes peuvent avoir tendance à s'ouvrir sous l'effet des efforts dynamiques répétés qu'elles subissent, ce qui risque de conduire à des défauts d'étanchéité des supports hydrauliques.

La présente invention a notamment pour but de pallier à cet inconvénient.

A cet effet, selon l'invention, un support antivibratoire hydraulique du genre en question est essentiellement caractérisé en ce que les bords de réception présentent respectivement des rebords faisant saillie axialement chacun à l'opposé de la pièce qui porte la patte correspondante, ces rebords formant respectivement des épaulements orientés vers l'intérieur perpendiculairement au premier axe, la patte correspondant à chacun desdits rebords présentant une extrémité libre repliée derrière ledit épaulement, pour ancrer ladite patte sur ledit rebord en empêchant cette patte sertie de s'ouvrir vers l'extérieur.

Grâce à ces dispositions, les pattes serties n'ont plus tendance à s'ouvrir au fil de l'utilisation du support antivibratoire, de sorte que celui-ci conserve une étanchéité parfaite.

Dans des modes de réalisation préférés de l'invention, on peut éventuellement avoir recours en outre à l'une et/ou à l'autre des dispositions suivantes :
- les pattes serties appartiennent à la plaque ajourée et les bords de réception correspondants appartiennent à la platine ;
- la base du corps en élastomère présente deux bords de fixation séparés l'un de l'autre par deux bords libres ;
- un capot rigide recouvre au moins partiellement la paroi épaisse du corps en élastomère de façon à limiter les débattements de la première armature par rapport à la platine, ce capot présentant une forme générale en Q ouvert selon un deuxième axe perpendiculaire audit premier axe, avec deux ailes de fixation solidarisées avec la platine, et la première armature se présente sous la forme d'un organe rigide allongé s'étendant longitudinalement selon ledit deuxième axe ;
- le corps en élastomère comporte en outre une paroi mince librement deformable qui délimite la deuxième chambre hydraulique avec la face de support de la platine, le canal étranglé étant lui-même délimité entre la base du corps en élastomère et ladite face de support de la platine.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de dessus d'un support antivibratoire hydraulique selon une forme de réalisation de l'invention,
- la figure 2 est une vue en coupe selon la ligne II-II de la figure 1,
- la figure 3 est une vue en coupe selon la ligne III-III de la figure 2,
- et la figure 4 est une vue de détail de la figure 3.

Sur les différentes figures, les mêmes références désignent des éléments identiques ou similaires.

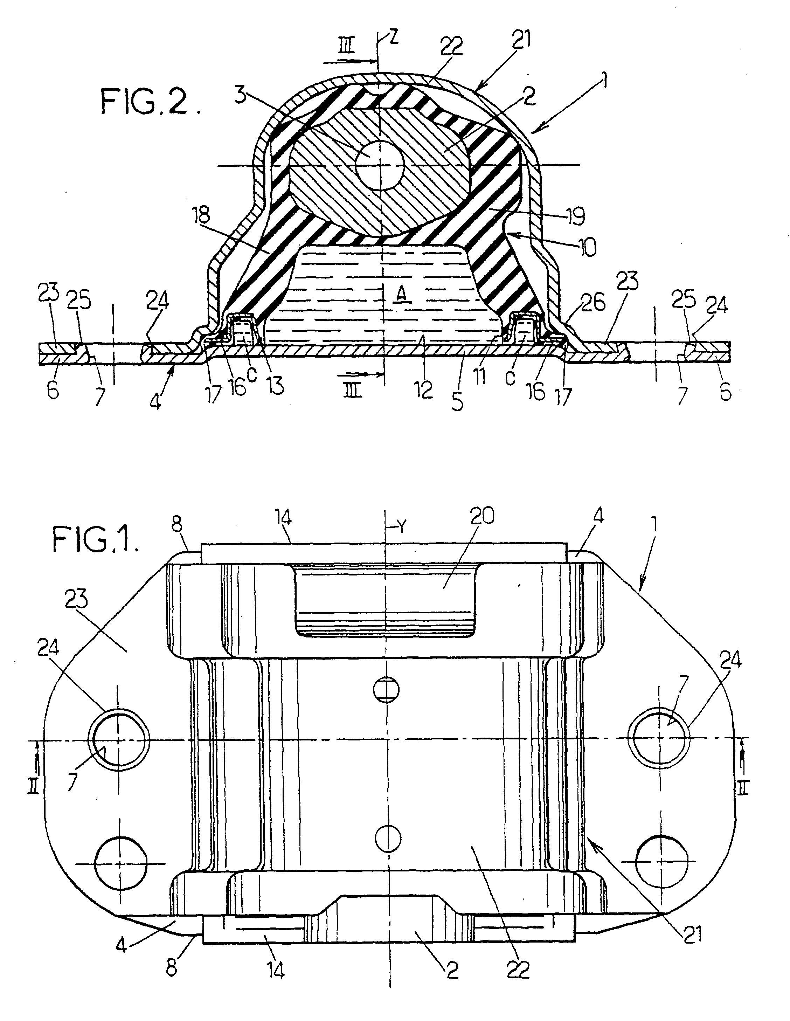

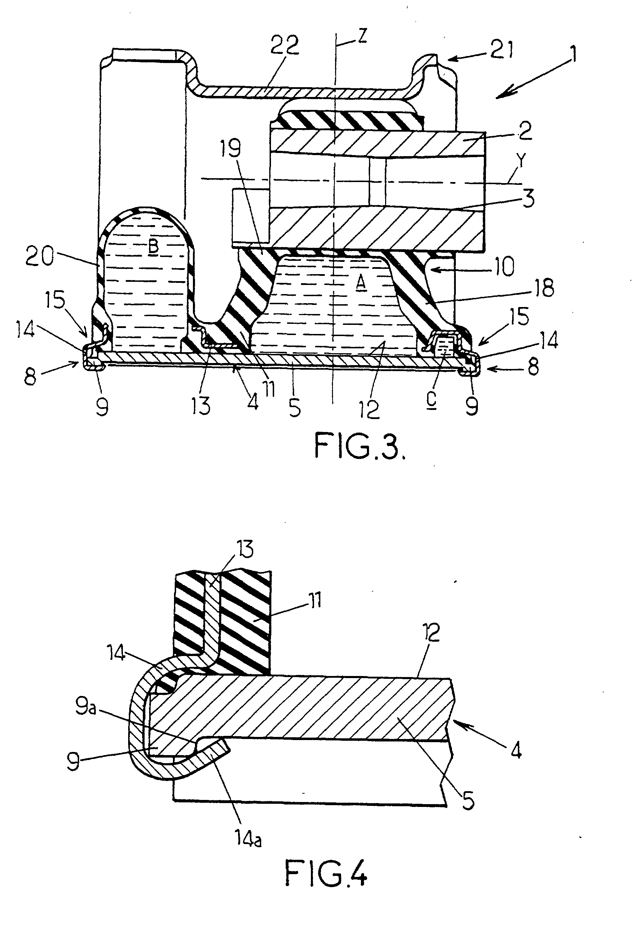

Le support antivibratoire hydraulique 1 représenté sur les figures 1 à 3 est destiné à être interposé entre deux éléments rigides tels qu'un châssis et un groupe motopropulseur de véhicule, pour supporter le groupe motopropulseur et pour amortir et filtrer des vibrations entre ces deux éléments, essentiellement selon un axe vertical Z.

Ce support antivibratoire comporte tout d'abord une première armature rigide 2 qui se présente sous la forme d'un organe métallique allongé s'étendant selon un axe Y perpendiculaire à l'axe Z et qui est percé d'un trou central 3 permettant sa fixation par exemple au groupe motopropulseur du véhicule.

Cette première armature 2 est disposée au-dessus d'une deuxième armature rigide 4, qui se présente sous la forme d'une platine métallique de forme générale sensiblement plane, s'étendant perpendiculairement à l'axe Z, c'est-à-dire horizontalement.

Cette platine 4 présente une partie centrale emboutie 5 de forme plane, qui est légèrement surélevée par rapport à deux ailes de fixation 6 encadrant ladite partie centrale.

Chacune de ces ailes 6 est pourvue d'au moins un trou de fixation 7 destiné à fixer la platine 4 au châssis du véhicule.

Bien entendu, la platine 4 pourrait être fixée au bloc motopropulseur et l'armature 2 au châssis, auquel cas l'armature 2 serait située sous la platine 4, la disposition de l'ensemble du support antivibratoire étant alors inversée par rapport à la disposition représentée sur les dessins.

Par ailleurs, la platine 4 présente deux bords latéraux 8 qui s'étendent chacun entre les deux ailes de fixation 6 et qui forment respectivement des rebords ou lisières 9 en décrochement vers le bas par rapport à la partie centrale 5.

De plus, la platine 4 est reliée à l'armature 2 par un corps en élastomère 10 qui est moulé d'une seule pièce et qui présente une base 11 appliquée de façon étanche sur la face supérieure 12 ou face de support de la platine 4, par simple serrage axial parallèlement à l'axe Z.

Ce serrage axial est obtenu par sertissage d'une plaque métallique rigide 13, ajourée et emboutie, qui est généralement réalisée en acier et qui est noyée dans la base 11 du corps en élastomère.

Plus particulièrement, cette plaque ajourée 13 présente deux pattes latérales 14 qui font saillie vers l'extérieur le long des rebords 9 à partir de deux bords opposés 15 de la base du corps en élastomère, et qui sont serties sur lesdits rebords 9.

Par ailleurs, les pattes 14 de la plaque ajourée 13 sont séparées l'une de l'autre par deux bords opposés 16 de ladite plaque, qui forment la périphérie de cette plaque ajourée avec les pattes 14 et qui constituent chacun une lisière plane parallèle au plan de la platine 4.

Ces deux bords libres 16 sont noyés dans la base 11 du corps en élastomère, qui forme ainsi également deux bords libres 17 en correspondance avec les bords 16, lesdits bords libres 16,17 étant simplement en appui axial contre la face supérieure 12 de la platine, sans sertissage.

Le corps en élastomère 10 comporte par ailleurs une paroi épaisse 18 en forme de cloche qui présente une résistance en compression suffisante pour servir de support au bloc motopropulseur. Cette paroi 18 s'étend en s'évasant vers le bas, depuis un sommet 19 adhérisé sur l'armature 2 jusqu'à la base 11 du corps en élastomère, en délimitant avec la face supérieure 12 de la platine une chambre de travail A remplie de liquide.

De plus, le corps en élastomère 10 forme en outre une membrane souple 20 également en forme de cloche, qui est librement déformable et qui délimite avec la face supérieure 12 de la platine une chambre de compensation B également remplie de liquide.

Les deux chambres A,B sont ainsi juxtaposées de façon non concentrique sur la face supérieure 12 de la platine, ces deux chambres pouvant être par exemple sensiblement alignées selon l'axe Y.

De plus, les deux chambres A,B communiquent ensemble par l'intermédiaire d'un canal étranglé C qui est délimité entre, d'une part, la face supérieure 12 de la platine, et d'autre part, une gorge ménagée dans la base 11 du corps en élastomère, la forme de cette gorge étant de préférence définie par des emboutis de la plaque ajourée 13.

Ce canal étranglé C permet ainsi des transferts de liquide entre les chambres A et B, afin d'amortir des vibrations entre l'armature 2 et la platine 4, essentiellement selon l'axe Z.

Enfin, pour limiter les débattements relatifs de l'armature 2 par rapport à la platine 4, le support antivibratoire comporte en outre un capot métallique rigide 21, qui est profilé sensiblement en forme de Ω et qui présente deux faces axiales ouvertes parallèlement à l'axe Y.

Ce capot 21 présente une partie centrale 22 qui peut coopérer par butée avec des bossages du corps en élastomère et qui est encadrée par deux ailes 23 horizontales qui reposent sur les ailes de fixation 6 de la platine.

Ces ailes 23 présentent respectivement des trous de fixation 24 en correspondance avec les trous de fixation 7 des ailes 6, de façon que la platine 4 et le capot 21 puissent être fixés ensemble par vissage sur le châssis du véhicule.

De plus, les ailes 23 et 6 sont avantageusement fixées l'une à l'autre par sertissage.

Par exemple, ce sertissage peut être réalisé en évasant des portions 25 de la platine 4 à l'intérieur des trous 24 des ailes du capot, lesquels trous ont dans ce cas une forme tronconique évasée vers le haut.

Enfin, entre sa partie centrale 22 et chacune de ses ailes 23, le capot comporte en outre un ressaut 26 formant une zone d'appui qui s'applique parallèlement à l'axe Z contre les bords libres 16, 17 de la plaque ajourée et de la base du corps en élastomère, en plaquant ainsi ces bords libres contre la face supérieure 12 de la platine.

On garantit ainsi un serrage calibré des bords libres 16,17 sur la platine 4, en évitant toute fuite de liquide entre ladite platine et la base du corps en élastomère au niveau desdits bords libres 16,17.

De plus, l'étanchéité du support antivibratoire est également garantie au niveau des bords 15 de la base du corps en élastomère.

A cet effet, comme représenté sur la figure 4, les extrémités libres 14a des pattes serties 14 sont repliées derrière les épaulements intérieurs 9a formés par les rebords 9, en ancrant ainsi lesdites pattes sur lesdits rebords de façon que ces pattes serties 14 ne puissent pas s'ouvrir vers l'extérieur.

On évite ainsi tout desserrage du sertissage entre la plaque ajourée 13 et la platine 4.

## Revendications

1. Support antivibratoire hydraulique, destiné à être interposé entre deux éléments rigides pour amortir des vibrations entre ces deux éléments essentiellement selon un premier axe (Z), ce support comportant :
- des première et deuxième armatures rigides (2,4), solidarisables respectivement avec les deux éléments rigides à réunir, la deuxième armature (4) étant constituée par une platine qui s'étend perpendiculairement au premier axe (Z) et qui présente une face dite de support (12), orientée vers la première armature,
- un corps en élastomère (10) qui relie la première armature (2) à la platine (4) et qui présente une base (11) appliquée en contact étanche contre la face de support (12) de la platine par simple serrage parallèlement au premier axe (Z), ce serrage axial étant obtenu au moyen d'une plaque ajourée rigide (13) qui est noyée dans la base (11) du corps en élastomère et qui est solidarisée avec la platine (4) par sertissage de pattes (14) sur des bords de réception (9), ces pattes et ces bords de réception appartenant respectivement les uns à la plaque ajourée (13) et les autres à la platine (4), la base (11) du corps en élastomère présentant à sa périphérie, d'une part, au moins deux bords opposés (15), dits bords de fixation, le long desquels est réalisé ledit sertissage, et d'autre part, au moins deux bords libres (17) qui séparent les bords de fixation (15), la plaque ajourée (13) présentant elle-même des bords libres (16) qui sont noyés dans les bords libres (17) de la base du corps en élastomère et qui sont simplement en appui axial contre la face de support (12) de la platine, le corps en élastomère comportant en outre une paroi épaisse (18) en forme de cloche qui s'étend selon le premier axe (Z) en s'évasant depuis un sommet (19) solidaire de la première armature jusqu'à la base (11) dudit corps en élastomère et qui délimite avec la face de support (12) de la platine au moins une première chambre hydraulique (A) remplie de liquide,
- une deuxième chambre hydraulique (B) déformable qui est également remplie de liquide,
- et un canal étranglé (C) rempli de liquide, qui relie entre elles les première et deuxième chambres hydrauliques (A,B),
**caractérisé en ce que** les bords de réception présentent respectivement des rebords (9) faisant saillie axialement chacun à l'opposé de la pièce qui porte la patte (14) correspondante, ces rebords formant respectivement des épaulements orientés perpendiculairement au premier axe vers l'intérieur, la patte (14) correspondant à chacun desdits rebords (9) présentant une extrémité libre (14a) repliée derrière ledit épaulement, pour ancrer ladite patte sur ledit rebord en empêchant cette patte sertie de s'ouvrir vers l'extérieur.

2. Support antivibratoire hydraulique selon la revendication 1, dans lequel les pattes serties (14) appartiennent à la plaque ajourée (13) et les bords de réception (9) correspondants appartiennent à la platine (4).

3. Support antivibratoire hydraulique selon la revendication 1 ou la revendication 2, dans lequel la base (11) du corps en élastomère présente deux bords de fixation (15) séparés l'un de l'autre par deux bords libres (17).

4. Support antivibratoire hydraulique selon la revendication 3, dans lequel un capot rigide (21) recouvre au moins partiellement la paroi épaisse (18) du corps en élastomère de façon à limiter les débattements de la première armature (2) par rapport à la platine (4), ce capot présentant une forme générale en Ω ouvert selon un deuxième axe (Y) perpendiculaire audit premier axe, avec deux ailes de fixation (23) solidarisées avec la platine (4), et la première armature (2) se présente sous la forme d'un organe rigide allongé s'étendant longitudinalement selon ledit deuxième axe (Y).

5. Support antivibratoire hydraulique selon l'une quelconque des revendications précédentes, dans lequel le corps en élastomère (10) comporte en outre une paroi mince (20) librement déformable qui délimite la deuxième chambre hydraulique (B) avec la face de support (12) de la platine, le canal étranglé (C) étant lui-même délimité entre la base (11) du corps en élastomère et ladite face de support de la platine.

## Patentansprüche

1. Hydraulisches schwingungsdämpfendes Lager, das dazu vorgesehen ist, zwischen zwei starren Elementen angeordnet zu werden, um Schwingungen zwischen diesen beiden Elementen im wesentlichen entlang einer ersten Achse (Z) zu dämpfen, wobei dieses Lager aufweist:
- eine erste und eine zweite starre Halterung (2, 4), die mit den beiden zu verbindenden starren Elementen fest verbunden werden können, wobei die zweite Halterung (4) aus einer Platte besteht, die sich im rechten Winkel zu der ersten Achse (Z) erstreckt und eine sogenannte Lagerfläche (12) aufweist, die der ersten Halterung zugewandt ist,
- einen Elastomerkörper (10), der die erste Halterung (2) mit der Platte (4) verbindet und der eine Basis (11) aufweist, die durch einfaches Festziehen parallel zur ersten Achse (Z) in dichten Kontakt mit der Lagerfläche (12) der Platte gebracht wird, wobei dieses axiale Festziehen mitteis einer starren, durchbrochenen Platte (13) erfolgt, die in der Basis (11) des Elastomerkörpers versenkt ist und mit der Platte (4) durch Bördeln von Laschen (14) an Aufnahmerändern (9) fest verbunden ist, wobei diese Laschen und diese Aufnahmeränder zu der durchbrochenen Platte (13) bzw zu der Platte (4) gehören, wobei die Basis (11) des Elastomerkörpers an ihrem Außenumfang einerseits mindestens zwei einander gegenüberliegende Ränder (15), genannt Befestigungsränder, aufweist, entlang derer diese Bördelverbindung hergestellt wird, und andererseits mindestens zwei freie Ränder (17) aufweist, die die Befestigungsränder (15) voneinander trennen, wobei die durchbrochene Platte (13) ihrerseits freie Ränder (16) aufweist, die in den freien Rändern (17) der Basis des Elastomerkörpers versenkt sind und sich einfach in axialer Anlage an der Lagerfläche (12) der Platte befinden, wobei der Elastomerkörper ferner eine glockenförmige, dicke Wand (18) aufweist, die sich in der Richtung der ersten Achse (Z) erstreckt, indem sie sich von einer Spitze (19), die mit der ersten Halterung fest verbunden ist, . bis zu der Basis (11) dieses Elastomerkörpers ausweitet, und die zusammen mit der Lagerfläche (12) der Platte mindestens eine erste, mit Flüssigkeit gefüllte Hydraulikkammer (A) umgrenzt,
- eine verformbare zweite Hydraulikkammer (B), die ebenfalls mit Flüssigkeit gefüllt ist, und
- einen mit Flüssigkeit gefüllten engen Kanal (C), der die erste und die zweite Hydraulikkammer (A, B) miteinander verbindet,
**dadurch gekennzeichnet,**
**dass** die Aufnahmeränder jeweils Krempen (9) aufweisen, die axial hervorstehen, und zwar jeweils abgewandt von dem Teil, an dem die entsprechende Lasche (14) sitzt, wobei diese Krempen jeweils Absätze bilden, die im rechten Winkel zu der ersten Achse nach innen gerichtet sind, wobei die zu jeder dieser Krempen (9) gehörige Lasche (14) ein freies Ende (14a) aufweist, das hinter diesen Absatz umgebogen ist, um diese Lasche an dieser Krempe zu verankern, wodurch verhindert wird, dass diese gebördelte Lasche sich nach außen öffnet.

2. Hydraulisches schwingungsdämpfendes Lager nach Anspruch 1, bei dem die gebördelten Laschen (14) zu der durchbrochenen Platte (13) gehören, und dass die entsprechenden Aufnahmeränder (9) zur Platte (4) gehören.

3. Hydraulisches schwingungsdämpfendes Lager nach Anspruch 1 oder 2, bei dem die Basis (11) des Elastomerkörpers zwei Befestigungsränder (15) aufweist, die durch zwei freie Ränder (17) voneinander getrennt sind.

4. Hydraulisches schwingungsdämpfendes Lager nach Anspruch 3, bei dem eine starre Abdeckung (21) die dicke Wand (18) des Elastomerkörpers zumindest teilweise dergestalt überdeckt, dass die Ausschläge der ersten Halterung (2) gegenüber der Platte (4) eingeschränkt werden, wobei diese Abdeckung die allgemeine Form eines Ω aufweist, das auf einer zweiten Achse (Y) offen ist, die im rechten Winkel zu der genannten ersten Achse verläuft, wobei zwei Befestigungsflügel (23) fest mit der Platte (4) verbunden sind und die erste Halterung (2) als starres, längliches Organ ausgeführt ist, das sich in Längsrichtung auf der genannten zweiten Achse (Y) erstreckt.

5. Hydraulisches schwingungsdämpfendes Lager nach einem der vorherigen Ansprüche, bei. dem der Elastomerkörper (10) ferner eine frei verformbare dünne Wand (20) aufweist, die die zweite Hydraulikkammer (B) mit der Lagerfläche (12) der Platte umgrenzt, wobei der enge Kanal (C) seinerseits zwischen der Basis (11) des Elastomerkörpers und der genannten Lagerfläche (12) der Platte eingegrenzt ist.

## Claims

1. A hydraulic antivibration support designed to be interposed between two rigid elements to damp vibration between the two elements essentially along a first axis (Z), the support comprising:
· first and second rigid strength members (2, 4) suitable for securing respectively to the two rigid elements to be united, the second strength member (4) being constituted by a plate which extends perpendicularly to the first axis (2) and which has a "support" face (12) facing towards the first strength member;
· an elastomer body (10) connecting the first strength member (2) to the plate (4) and having a base (11) pressed in sealing contact against the support face (12) of the plate merely by being clamped parallel to the first axis (Z), said axial clamping being obtained by means of a rigid perforated insert (13) which is embedded in the base (11) of the elastomer body and which is secured to the plate (4) by crimping tabs (14) over reception edges (9), said tabs belonging to one of the perforated insert (13) and the plate (4) and said reception edges belonging to the other, the base (11) of the elastomer body having, at its periphery, firstly at least two opposite "fixing" edges (15) along which said crimping is performed, and secondly at least two free edges (17) which interconnect the fixing edges (15), the perforated insert (13) itself having free edges (16) which are embedded in the free edges (17) of the base of the elastomer body and which are merely pressed axially against the support face (12) of the plate, the elastomer body also having a bell-shaped thick wall (18) extending along the first axis (Z) flaring from a top (19) secured to the first strength member to the base (11) of said elastomer body, and co-operating with the support face (12) of the plate to define at least a first hydraulic chamber (A) filled with liquid;
· a deformable second hydraulic chamber (B) which is also filled with liquid; and
· a narrow channel (C) filled with liquid and interconnecting the first and second hydraulic chambers (A, B);
the support being **characterized in that** the reception edges present respectively rims (9) projecting axially away from the part carrying the corresponding tab (14), said rims forming respective inwardly-directed shoulders extending perpendicularly to the first axis, the tab (14) corresponding to each of said rims (9) having a free end (14a) which is folded behind said shoulder to anchor said tab on said rim, thereby preventing the crimped tab from opening outwards.

2. A hydraulic antivibration support according to claim 1, in which the crimped tabs (14) belong to the perforated insert (13) and the corresponding reception edges (9) belong to the plate (4).

3. A hydraulic antivibration support according to claim 1 or claim 2, in which the base (11) of the elastomer body has two fixing edges (15) interconnected by two free edges (17).

4. A hydraulic antivibration support according to claim 3, in which a rigid cover (21) covers the thick wall (18) of the elastomer body, at least in part, so as to limit displacement of the first strength member (2) relative to the plate (4), said cover being generally Ω-shaped and open on a second axis (Y) perpendicular to said first axis, with two fixing flanges (23) secured to the plate (4), and the first strength member (2) is in the form of an elongate rigid member extending longitudinally along said second axis (Y).

5. A hydraulic antivibration support according to any preceding claim, in which the elastomer body (10) also has a freely-deformable thin wall (20) which co-operates with the support face (12) of the plate to define the second hydraulic chamber (B), the narrow channel (C) itself being defined between the base (11) of the elastomer body and said support face of the plate.
